# EUROPÄISCHE PATENTSCHRIFT

(11) **EP 2 493 786 B1**
(45) Veröffentlichungstag und Bekanntmachung des Hinweises auf die Patenterteilung: **11.09.2013**
(21) Anmeldenummer: 10737748.3
(22) Anmeldetag: 15.06.2010
(51) Int. Cl.: B65G 1/127, B65G 23/44

(54) **LAGERSYSTEM MIT UNABHÄNGIG SPANNBAREN ANTRIEBSMITTELN**
STORAGE SYSTEM HAVING DRIVE MEANS THAT CAN BE TENSIONED INDEPENDENTLY
SYSTÈME DE STOCKAGE À MOYENS D'ENTRAÎNEMENT POUVANT ÊTRE TENDUS INDIVIDUELLEMENT

(30) Priorität: 29.10.2009 DE 102009051194
(43) Veröffentlichungstag der Anmeldung: 05.09.2012
(73) Patentinhaber: Kardex Produktion Deutschland GmbH, 86476 Neuburg/Kammel (DE)
(72) Erfinder: KOLLMANN, Wolfgang, 87772 Pfaffenhausen (DE); PRESCHKE, Harald, 89269 Vöhringen (DE)
(74) Vertreter: Grünecker, Kinkeldey, Stockmair & Schwanhäusser
(86) Internationale Anmeldenummer: PCT/EP2010/003580
(87) Internationale Veröffentlichungsnummer: WO 2011/050868

(56) Entgegenhaltungen:
- EP-A1- 1 188 694
- DE-A1- 3 400 743
- DE-A1- 3 710 722
- DE-U1-202008 014 206

## Beschreibung

Die Erfindung betrifft ein Lagersystem mit Lagergutträgern zur Einlagerung von Lagergut im Lagersystem, mit einem Antriebsrad, einem mit dem Antriebsrad gekoppelten Motor, einem über ein erstes umlaufendes Antriebsmittel antriebskraftübertragend mit dem Antriebsrad gekoppelten Abtriebsrad, und mit wenigstens einem ortsfesten Umlenkrad, das durch ein zweites umlaufendes Antriebsmittel mit dem Abtriebsrad antriebskraftübertragend gekoppelt ist, wobei das Abtriebsrad gegenüber dem Umlenkrad abstandsverschieblich gelagert ist.

Lagersysteme der vorgenannten Art sind bekannt und können beispielsweise als Paternoster-Lagerlifte, horizontale Umlaufregale oder Lagerliftsysteme zur automatischen Ein- und Auslagerung von Lagergut ausgestaltet sein. Das erste umlaufende Antriebsmittel dient der Übertragung und Übersetzung der von einem Motor erzeugten Antriebskraft auf das zweite Antriebsmittel. Das zweite umlaufende Antriebsmittel, das vorübergehend mit Lagergutträgern des Lagersystems gekoppelt wird oder fest mit diesen verbunden ist, dient der Übertragung einer Antriebskraft auf einzelne oder eine Vielzahl von Lagergutträgern, um diese innerhalb des Lagersystems zu einem Lagerplatz oder zu einer Bedienstation des Lagersystems zu bewegen. Das zweite umlaufende Antriebsmittel ist antriebskraftübertragend mit einem von dem ersten Antriebsmittel angetriebenen Abtriebsrad gekoppelt und über wenigstens ein ortsfestes Umlenkrad in dem Lagersystem geführt.

Beispielsweise beschreibt die Druckschrift DE 34 00 743 A1 ein Lagersystem gemäß den Oberbegriff des Anspruchs 1 und einen mechanischen Schrank mit einem paternosterartigen Umlaufförderer mit einer Endloskette, die über ein Antriebsrad, ein Umlenkrad und ein Spannrad geführt ist.

Um die Spannung die Antriebsmittel nachspannen zu können, kann das Abtriebsrad gegenüber dem Umlenkrad abstandsverschieblich gelagert sein. Das erste Antriebsmittel kann über das Gewicht der Lagergutträger und des auf den Lagergutträgern befindlichen Lagergutes gespannt werden, indem beispielsweise ein an einem unteren Ende des Lagersystems angeordnetes Abtriebsrad in einer vertikalen Richtung verschieblich angeordnet ist und bei einer Längung des Antriebsmittels in einer vertikalen Richtung nach unten wandert.

Da das Abtriebsrad über das erste umlaufendes Antriebsmittel mit dem Antriebsrad antriebskraftübertragend gekoppelt ist, wirkt sich bei den bekannten Lagersystemen eine Verschiebung des Abtriebsrades auch auf die Spannung des ersten umlaufenden Antriebsmittels aus. Das zweite Antriebsmittel, das Lagergutträger über die gesamte Höhen- oder Längenerstreckung eines Lagersystems transportiert, weist üblicherweise eine deutlich größere Länge als das erste Antriebsmittel auf. Somit kann ein Nachspannen des ersten Antriebsmittels durch eine Veränderung des Abstandes zwischen Abtriebsrad und Umlenkrad zu einer zu großen oder zu geringen Spannung in einem der beiden Antriebsmittel führen.

Der vorliegenden Erfindung liegt folglich die Aufgabe zugrunde, ein Lagersystem zu schaffen, bei dem sich eine hohe Spannung im zweiten Antriebsmittel, beispielsweise durch eine hohe Beladung der Lagergutträger, nicht auf die Spannung in ersten Antriebsmittel auswirkt.

Diese Aufgabe wird mit dem Lagersystem gemäß Anspruch 1 gelöst.

Die unabhängige abstandsverschiebliche Lagerung des Antriebsrades ermöglicht eine Einstellung der Spannung des ersten oder des zweiten umlaufenden Antriebsmittels unabhängig von der Spannung des jeweils anderen Antriebsmittels. Kurzfristige Spannungsspitzen, die beispielsweise während des Transports von sehr schwerem Lagergut in dem zweiten Antriebsmittel auftreten können, haben somit keine Auswirkungen auf das erste Antriebsmittel.

Die erfindungsgemäße Lösung kann mit den folgenden weiteren, jeweils für sich vorteilhaften Ausgestaltungsformen beliebig kombiniert und weiter verbessert werden:

Gemäß einer ersten möglichen vorteilhaften Ausgestaltungsform eines erfindungsgemäßen Lagersystems können das Antriebsrad und das Abtriebsrad an einem gegenüber einer Stützstruktur des Lagersystems beweglichen Tragelement angeordnet sein. Somit ist die Spannung des zweiten Antriebsmittels von dem ersten Antriebsmittel entkoppelt und eine Verschiebung des Abtriebsrades gegenüber dem Umlenkrad hat keinen Einfluss auf die Spannung des ersten Antriebsmittels. Wird das Abtriebsrad beispielsweise zur Einstellung der Spannung des zweiten Antriebsmittels in Richtung des Umlenkrades oder von dem Umlenkrad weg verschoben, folgt das mit dem Abtriebsrad verbundene Antriebsrad dem Abtriebsrad. Der Abstand zwischen Abtriebsrad und Antriebsrad und die Spannung des ersten Antriebsmittels zwischen Abtriebsrad und Antriebsrad bleibt unabhängig von der Verschiebung des Abtriebsrades konstant.

Das Tragelement entkoppelt das erste Antriebsmittel von der Spannung des zweiten Antriebsmittels. Das Tragelement kann vorzugsweise auch eine Spanneinrichtung des zweiten Antriebsmittels bilden, indem durch eine Verschiebung des Tragelementes die Spannung des zweiten Antriebsmittels einstellbar ist.

Gemäß einer weiteren vorteilhaften Ausgestaltung des Lagersystems können das Abtriebsrad und das Antriebsrad gemeinsam mit dem mit dem Antriebsrad gekoppelten Motor an dem beweglichen Tragelement angeordnet sein. Das Antriebsrad und/oder Abtriebsrad und/oder der Motor können an dem Tragelement befestigt oder gelagert sein. Das Antriebsrad, das Abtriebsrad, das erste umlaufende Antriebsmittel und der Motor können gemeinsam mit dem Tragelement eine Antriebseinheit bilden, die für eine Verschiebung des Antriebsrades gegenüber dem Umlenkrad als Ganzes verschiebbar ist.

Das Lagersystem kann eine Stützstruktur aufweisen, die wesentliche Komponenten des Lagersystems, beispielsweise das wenigstens eine Umlenkrad und Wandpaneele zur Verkleidung des Lagersystems, trägt. An der Stützstruktur kann das Umlenkrad ortsfest befestigt und das Abtriebsrad beweglich gelagert sein.

In einer weiteren vorteilhaften Ausgestaltung des Lagersystems kann das Tragelement ein in der Stützstruktur des Lagersystems verschieblich geführter Schlitten sein. Die Stützstruktur kann Führungsorgane, beispielsweise in Form von Führungsschienen oder -flächen ausbilden, durch welche das Tragelement geführt ist. Vorzugsweise ist das Tragelement in und entgegen einer in Richtung des Umlenkrades weisenden Richtung geführt.

Das Tragelement kann zwischen zwei Tragstützen der Stützstruktur angeordnet und auf sich gegenüberliegenden flächen der Tragstützen geführt sein. Somit bildet die Stützstruktur des Lagersystems die Führung des Tragelementes, ohne dass zusätzliche Führungsorgane für die verschiebliche Lagerung des Tragelementes benötigt werden.

Für eine leichte Gestaltung bei hoher Steifigkeit kann das Tragelement rahmenartig ausgestaltet sein, wobei zwei parallel zueinander verlaufende Abschnitte des Rahmens Gleitflächen oder Gleitschienen ausbilden. Die Gleitflächen oder Gleitschienen können im montierten Zustand auf zugeordneten Gleitflächen der Stützstruktur aufliegen.

Um bei einem vertikal angeordneten Lagerlift, insbesondere einem Paternoster-Lagerlift, bei dem Umlenkrad und Abtriebsrad übereinander angeordnet sind, den Abstand zwischen Abtriebsrad und Antriebsrad einstellen zu können, ist das Tragelement vorzugsweise in einer vertikalen Richtung geführt. Alternativ kann das Tragelement horizontal oder schräg in der Stützstruktur geführt sein.

Das erste und zweite Antriebsmittel können unterschiedlich ausgestaltet sein, um unterschiedlichen Anforderungen an das erste bzw. zweite Antriebsmittel gerecht zu werden. Beispielsweise können das erste und zweite Antriebsmittel als Zugmittel und insbesondere als Rollenkette ausgestaltet sein. Für eine antriebskraftübertragende Verbindung des Abtriebsrades mit dem zweiten Antriebsmittel kann ein Zwischenrad vorgesehen sein, um das das zweite umlaufende Antriebsmittel umläuft und das konzentrisch zum Abtriebsrad angeordnet und starr mit diesem verbunden ist und. Beispielsweise können das Abtriebsrad und das Zwischenrad von einem Kettenrad gebildet sein. Zur Kopplung des Abtriebsrades mit dem Zwischenrad kann das Lagersystem eine Welle umfassen, welche das Abtriebsrad und das Zwischenrad trägt. Die Welle kann vorzugsweise in dem abstandsverschieblich gelagerten Tragelement gelagert sein.

Gemäß einer weiteren vorteilhaften Ausgestaltung des Lagersystems kann das Antriebsrad an einem schwenkbaren Hebelelement beabstandet von einer Schwenkachse des Hebelelementes beweglich gegenüber dem Tragelement angeordnet sein. Somit kann das zweite Antriebsmittel durch eine Schwenkbewegung des Hebelelementes gespannt werden. Während bei einer Schwenkbewegung des Hebelelementes das Antriebsrad mit dem Hebel relativ zum Tragelement geschwenkt wird, ist das Abtriebsrad vorzugsweise unverschieblich mit dem Tragelement verbunden, so dass der Abstand zwischen Antriebsrad und Abtriebsrad durch eine Schwenkbewegung des Hebelelementes einstellbar ist.

In einer weiteren vorteilhaften Ausgestaltung des Lagersystems kann der Motor am Hebelelement beabstandet von der Schwenkachse befestigt sein. Der Motor ist somit zusammen mit dem Hebelelement und dem Antriebsrad schwenkbar. Der Motor kann über ein zwischen Motor und Antriebsrad angeordnetes Getriebe oder durch eine starre Antriebswelle mit dem Antriebsrad verbunden sein.

Vorzugsweise bildet das Gehäuse des Motors und/oder das Gehäuse eines an den Motor angeschlossenen Getriebes das Hebelelement. Ein Hebelgelenk, um welches das Hebelelement schwenkbar ist, kann unmittelbar an dem Gehäuse eines zwischen Motor und Antriebsrad angeordneten Getriebes oder an dem Gehäuse des Motors angeordnet sein. Beispielsweise kann ein an dem Getriebe oder dem Motor befestigter Gelenkzapfen vorgesehen sein, der in eine Gelenkzapfenaufnahme an dem Tragelement einsetzbar ausgestaltet ist. Auf diese Weise ist die Anzahl der Einzelteile des Lagersystems verringert.

Eine auf das erste Antriebsmittel wirkende Spannkraft kann insbesondere durch eine Gewichtslast des Motors und/oder des Antriebsrades und/oder des Hebelelementes erzeugt sein. Auf diese Weise kann die Gewichtslast dieser Komponenten das erste Antriebsmittel spannen. Vorzugsweise bildet das Hebelelement mit dem an dem Hebel befestigten Motor und/oder Getriebe und/oder Antriebsrad eine automatische Spanneinrichtung, wobei durch die Gewichtskraft des Hebelelementes und/oder des an dem Hebelelement befestigten Antriebsrades, Motors und/oder Getriebes eine Abstandsverschiebung des Antriebsrades gegenüber dem Abtriebsrad ausgelöst wird.

Die über das Antriebsrad in das erste Antriebsmittel eingeleitete Antriebskraft zieht das Antriebsrad in Richtung des Abtriebsrades und wirkt somit der das Antriebsrad von dem Abtriebsrad weg drückenden Spannkraft entgegen. Um die Spannung des ersten Antriebsmittels zu erhalten oder eine Bewegung des Antriebsrades in Richtung des Abtriebsrades zu verhindern, kann ein Sperrorgan vorgesehen sein, das unter Wirkung der Gewichtslast des Motors und/oder des Antriebsrades und/oder des Hebelelementes selbsttätig von einer Verschiebestellung, in der das Antriebsrad in Richtung weg vom Abtriebsrad verschieblich ist, in eine Haltestellung, in der eine Bewegung des Antriebsrades zum Abtriebsrad blockiert ist, beweglich ausgestaltet ist. Das Sperrorgan kann durch eine Bewegung des Hebelelementes in Richtung der Spannkraft oder in einer Spannrichtung in die Verschiebestellung und bei einer Bewegung des Hebelelementes entgegen der Spannkraft oder der Spannrichtung in die Haltestellung überführbar sein. Insbesondere bei einem Stillstand des Motors kann somit das Hebelelement automatisch in Richtung der Spannkraft schwenken, während ein Zurückschwenken des Hebelelementes entgegen der Spannkraft aufgrund der in das erste Antriebsmittel eingeleiteten Antriebskraft durch das Sperrorgan blockiert ist. Um ein unbeabsichtigtes Lösen des Sperrorgans oder eine unbeabsichtigte Bewegung des Sperrorgans von der Haltestellung in die Verschiebestellung zu verhindern, ist vorzugsweise eine Sperrfeder vorgesehen, durch welche das Sperrorgan in die Haltestellung gedrückt ist. Beispielsweise kann das Sperrorgan drehbar an dem Hebelelement angeordnet sein, wobei die Haltestellung und die Verschiebestellung jeweils einer Winkelstellung des Sperrorgans entsprechen. In dieser Ausführungsform kann die Sperrfeder ein Drehmoment auf das Sperrorgan ausüben, durch welches das Sperrorgan in die Haltestellung gedrückt ist. Hierzu ist die Sperrfeder vorzugsweise als Schenkelfeder ausgestaltet.

Das Sperrorgan kann gemäß einer weiteren vorteilhaften Ausgestaltung insbesondere als ein gegenüber dem Tragelement drehbares Exzenterelement mit einer Andruckfläche ausgestaltet sein, die mit einer mit dem Tragelement bewegungsstarr verbundenen Sperrfläche in Eingriff bringbar angeordnet und unter Wirkung der Gewichtslast von der Sperrfläche weg beweglich ist. Das Exzenterelement kann beispielsweise bei einer Bewegung des Hebelelementes auf der Sperrfläche abrollen. Vorzugsweise wird die Andruckfläche bei einer Überführung des Exzenterelementes in die Haltestellung in Richtung der Sperrfläche und bei einer Überführung in die Verschiebestellung von der Sperrfläche weg bewegt.

Das Exenterelement kann an dem Hebelelement drehbar gelagert sein, wobei die Andruckfläche auf der Sperrfläche aufliegt. Das Exenterelement kann bei einer Bewegung des Hebelelementes auf der Sperrfläche abrollen. Die Sperrfläche kann eben ausgestaltet sein. Um den Flächenkontakt zwischen Andruckfläche und Sperrfläche auch bei einer Bewegung des Hebelelementes sicherzustellen, kann die Gestaltung der Andruckfläche an die durch die Kreisbewegung des Hebelelementes entstehende Abstandsänderung gegenüber der Sperrfläche angepasst sein. Insbesondere kann der Verlauf des Abstandes zwischen der Andruckfläche und einer Drehachse des Exenterelementes über den Umfang des Exenterelementes derart ausgestaltet sein, dass die bei einer Drehbewegung des Hebels hervorgerufene Abstandsänderung der Drehachse gegenüber der Sperrfläche kompensiert ist.

Die Andruckfläche des Exzenterelementes bildet vorzugsweise mit der Sperrfläche des Tragelementes einen Reibschluss, durch den ein Verrutschen der Andruckfläche gegenüber der Sperrfläche insbesondere bei einer Bewegung des Tragelementes entgegen der Spannkraft verhindert ist. Bei einer Bewegung des Tragelementes wird durch die Sperrfläche eine Tangentialkraft auf die Andruckfläche übertragen, die zu einer Drehung des Exzenterelementes führt, wobei der mit der Sperrfläche gepaarte Abschnitt der Andruckfläche in Richtung der Sperrfläche gedrückt wird. Die Normalkraft zwischen Andruckfläche und Sperrfläche wird dadurch soweit vergrößert, dass eine Bewegung des Tragelementes in der Stützstruktur aufgrund der entstandenen Haftreibung zwischen Tragelement und Stützstruktur blockiert ist.

In einer weiteren vorteilhaften Ausgestaltung des Lagersystems kann zwischen der Stützstruktur und dem Tragelement ein verstellbarer Abstandhalter vorgesehen sein, durch den der Abstand zwischen Abtriebsrad und Umlenkrad einstellbar ist. Das Tragelement kann auf diese Weise für die Einstellung des Abstandes zwischen Abtriebsrad und Umlenkrad in einer vorbestimmten Position arretiert werden. Der Abstandhalter kann beispielsweise von einer Gewindestange oder einer Schraube gebildet sein, die in der Stützstruktur des Lagersystems oder in dem Tragelement drehbar geführt und in dem Tragelement oder der Stützstruktur in einer Verstellrichtung eingeschraubt ist. Somit kann durch ein Verdrehen der Gewindestange oder Schraube das Tragelement zugleich verschoben und arretiert werden.

Um insbesondere die auf das zweite Antriebsmittel wirkenden Kräfte auf einen Maximalwert zu begrenzen, kann zwischen dem Abstandhalter und dem Tragelement ein elastisch verformbares Federelement angeordnet sein. Auch die auf eine das Abtriebsrad und das Zwischenrad verbindende Welle wirkende Umlaufbiegung kann auf diese Weise auf einen vorgegebenen Wert begrenzt sein, so dass eine dauerfeste Verbindung zwischen Abtriebsrad und Antriebsrad mit einer kleineren Welle erreicht wird. Durch das Federelement ist vorzugsweise eine von dem Umlenkrad weg weisende Spannkraft auf das Abtriebsrad übertragbar, so dass durch die elastische Verformung des Federelementes auch bei einer Längung des zweiten Antriebsmittels wenigstens eine Restspannung in dem Antriebsmittel erhalten bleibt.

Im Folgenden wird die Erfindung anhand vorteilhafter Ausführungsformen mit Bezug auf die Figuren beispielhaft erläutert. Die beschriebenen Ausführungsformen stellen dabei lediglich mögliche Ausgestaltungen dar, die für den jeweiligen Anwendungsfall modifiziert werden können. Einzelne, für sich vorteilhafte Merkmale können gemäß der obigen Beschreibung der vorteilhaften Ausgestaltungen unabhängig voneinander der beschriebenen Ausführungsform hinzugefügt oder weggelassen werden.

Es zeigen:
- Fig. 1: eine schematische perspektivische Teilansicht eines erfindungsgemäßen Lagersystems;
- Fig. 2: eine weitere schematische perspektivische Teilansicht eines erfindungsgemäßen Lagersystems;
- Fig. 3: eine schematische Perspektivansicht einer Antriebseinheit eines erfindungsgemäßen Lagersystems;
- Fig. 4: eine schematische perspektivische Teilansicht eines Motors eines erfindungsgemäßen Lagersystems,
- Fig. 5: eine schematische Seitenansicht eines erfindungsgemäßen Lagersystems.

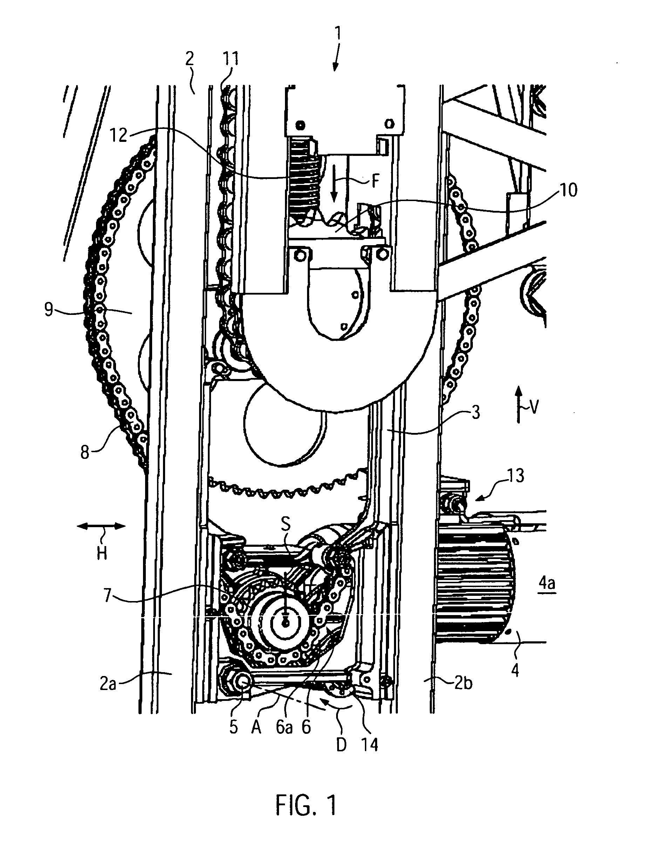

Zunächst wird das erfindungsgemäße Lagersystem 1 mit Bezug auf Fig. 1 beschrieben, welche einen Ausschnitt eines erfindungsgemäßen Lagersystems 1 zeigt. Fig. 1 ist eine Innenansicht eines Ausschnitts eines erfindungsgemäßen Lagersystems 1.

Das Lagersystem 1 ist mit einer Stützstruktur 2 versehen, welche die Komponenten des Lagersystems 1 und das Lagergut trägt. An der Stützstruktur 2 ist ein Tragelement 3 verschieblich angeordnet. Um das Tragelement 3 in oder entgegen einer vertikalen Richtung V verschieben zu können, ist das Tragelement 3 an der Stützstruktur 2 verschieblich gelagert. Dazu ist das Tragelement 3 als verschieblicher Schlitten ausgeführt, der zwischen zwei sich in eine vertikale Richtung V erstreckenden Tragstützen 2a und 2b der Stützstruktur 2 angeordnet ist. Das Tragelement 3 liegt mit zwei parallel zueinander und in vertikaler Richtung V verlaufenden Außenflächen an einander gegenüberliegenden Flächen der Tragstützen 2a, 2b an.

Mit dem Tragelement 3 ist ein Motor 4 über eine Schwenkachse 5 um eine Achse A drehbar verbunden. Zwischen Motor 4 und Schwenkachse 5 sind des Weiteren ein Getriebe 6 und ein über das Getriebe 6 mit dem Motor 4 antriebskraftübertragend verbundenes Antriebsrad 7 angeordnet. Das Antriebsrad 7 ist wiederum durch ein antriebskraftübertragendes erstes Antriebsmittel 8 mit einem Abtriebsrad 9 gekoppelt.

Eine hier nicht dargestellte Antriebswelle, die in dem Tragelement 3 drehbar gelagert ist, verbindet das Abtriebsrad 9 konzentrisch und starr mit einem Zwischenrad 10. Das Zwischenrad 10 treibt wiederum ein zweites Antriebsmittel 11 an. Das erste Antriebsmittel 8 ist folglich durch das Abtriebsrad 9, eine zwischen Abtriebsrad 9 und Zwischenrad 10 angeordnete Welle und das Zwischenrad 10 mit dem zweiten Antriebsmittel 11 antriebskraftübertragend verbunden. Das zweite Antriebsmittel 11 erstreckt sich in vertikaler Richtung V über die gesamte Förderlänge des Lagersystems 1 und läuft in vertikaler Richtung V oberhalb des Zwischenrades 10 um ein hier nicht gezeigtes Umlenkrad um.

Abtriebsrad 9 und Zwischenrad 10 sind über die Abtriebsrad 9 und Zwischenrad 10 verbindende Welle in dem Tragelement 3 gelagert und mit diesem in oder entgegen der vertikalen Richtung V verschieblich. Somit kann durch eine Verschiebung des Tragelementes 3 entgegen der vertikalen Richtung V die Zugspannung in dem zweiten Antriebsmittel 11 erhöht werden. Zur Einstellung der Spannung des zweiten Antriebsmittels 11 ist ein in oder entgegen der vertikalen Richtung V oder in einer Verschieberichtung des Tragelementes 3 verstellbarer Abstandhalter vorgesehen, der das Tragelement 3 mit der Stützstruktur 2 verbindet und über den die vertikale Position des Tragelementes 3 eingestellt werden kann. Zwischen dem hier nicht gezeigten Abstandhalter und dem Tragelement 3 ist ein elastisch verformbares Federelement 12 angeordnet, durch das eine elastische Federkraft F von der Stützstruktur 2 auf das Tragelement 3 übertragbar ist. Das Federelement 12 dämpft Stöße, die auf die Antriebsmittel 8 oder 11 wirken, und sorgt für die Aufrechterhaltung einer Spannung in dem Antriebsmittel 11, auch wenn sich dieses aufgrund von Verschleiß oder einer höheren Belastung längt.

Beide Antriebsmittel 8, 11 sind beispielsweise als Rollenketten ausgestaltet. Wie Fig. 1 zeigt, kann insbesondere das zweite Antriebsmittel 11 deutlich größer und fester dimensioniert sein als das erste Antriebsmittel 8. Das Lagersystem 1 kann als Paternoster-Lagerlift ausgestaltet sein, bei dem Lagergutträger zur Einlagerung von Lagergut an dem zweiten Antriebsmittel 11 befestigt sind. Das zweite Antriebsmittel 11 trägt somit die Lagergutträger und wird mit der Gewichtskraft des Lagergutes belastet. Die Gewichtskraft des hier nicht gezeigten Lagergutes spannt das zweite Antriebsmittel 11 entgegen der vertikalen Richtung V, so dass das zweite Antriebsmittel 11 entgegen der vertikalen Richtung V gelenkt wird. Infolge der Längung des zweiten Antriebsmittels 11 kann das Tragelement 3 entgegen der vertikalen Richtung V nach unten rutschen. Da Antriebsrad 7, Abtriebsrad 9, erstes Antriebsmittel 8 und der Motor 4 mit dem Getriebe 6 gemeinsam an dem Tragelement befestigt sind und sich der Abstand zwischen Antriebsrad 7 und Abtriebsrad 9 bei einer Verschiebung des Tragelementes nicht ändert, hat eine Verschiebung des Tragelementes 3 keinen Einfluss auf die Spannung des ersten Antriebsmittels 8.

Das erste Antriebsmittel 8 wird durch eine Drehbewegung eines Hebelelementes 13 um die Schwenkachse 5 gespannt. Das Hebelelement 13 ist von einem Gehäuse 4a des Motors 4 und einem Gehäuse 6a des Getriebes 6 gebildet. Die Gewichtslasten des Motors 4, des Getriebes 6 und des Antriebsrades 7 erzeugen über das Hebelelement 13 ein um die Schwenkachse 5 wirkendes Moment, durch welches eine auf das Antriebsrad 7 wirkende Spannkraft S erzeugt ist. Die Spannkraft S drückt das Antriebsrad 7 von dem Abtriebsrad 9 weg und spannt somit das erste Antriebsmittel 8.

Um nach einer Abwärtsbewegung des Hebelelementes 13 in Richtung der Spannkraft S oder im Uhrzeigersinn um die Schwenkachse 5 eine Rückbewegung des Hebels 13 in die entgegengesetzte Richtung und somit einem ungewollten Verlust der Spannung in dem ersten Antriebsmittel 8 zu vermeiden, ist an dem Hebel 13 ein Sperrorgan 14 angeordnet. Das Sperrorgan 14 ist als Exzenterelement ausgestaltet.

Das Sperrorgan 14 ist drehbar an dem Hebelelement 13 gelagert und liegt mit einer Andruckfläche an seinem Umfang an seiner Sperrfläche des Tragelementes 3 an. Zwischen Sperrorgan 14 und Gehäuse 6b ist eine Sperrfeder 22 angeordnet. Ein Schenkel 22a der vorzugsweise als Schenkelfeder ausgestalteten Sperrfeder 22 ist in eine Bohrung des Exenterelementes 14, ein Schenkel 22b in eine Bohrung des Gehäuses 6a eingesetzt. Die mit dem Sperrorgan verbundene Sperrfeder 22 übt eine Federkraft auf das Sperrorgan 14 aus, aus der ein im Uhrzeigersinn, in einer Drehrichtung D wirkendes Drehmoment resultiert. Das Drehmoment überführt das Sperrorgan 14 in eine Haltestellung, in der eine Drehbewegung des Hebelelementes 13 entgegen den Uhrzeigersinn gegenüber dem Tragelement 3 blockiert ist.

Bei einer Bewegung des Hebelelementes 13 im Uhrzeigersinn rollt das Sperrorgan 14 auf der zugeordneten Sperrfläche des Tragelements 3 ab, bis sich aufgrund des exzentrischen Umfangs des Sperrorgans 14 die Andruckfläche des Sperrorgans 14 soweit von der zugeordneten Sperrfläche des Tragelements 3 entfernt hat, dass das Hebelelement 13 entsperrt ist und entgegen der vertikalen Richtung V nach unten rutschen kann. Folglich wird das erste Antriebsmittel 8 bei einer Längung durch Verschleiß automatisch nachgespannt.

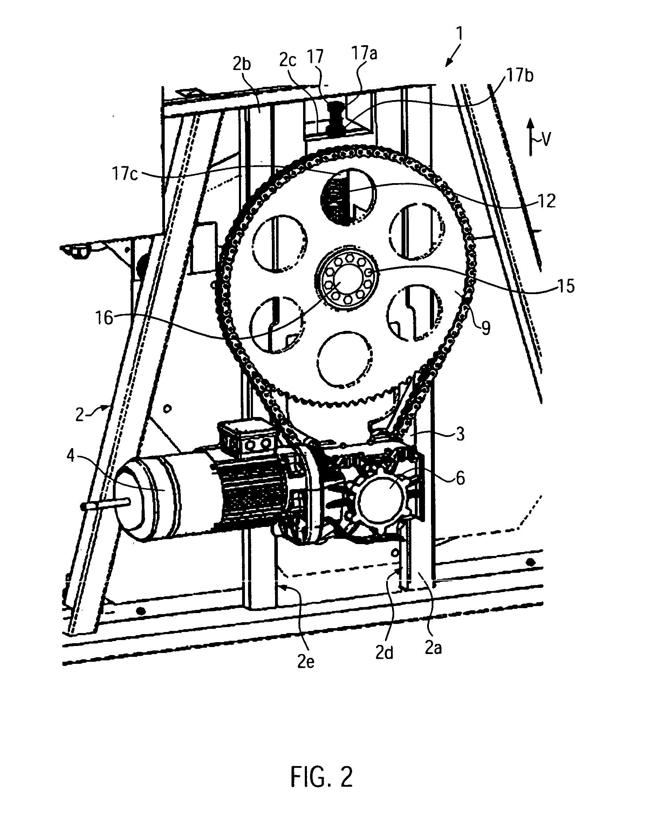

Fig. 2 ist eine Außenansicht eines Abschnitts eines erfindungsgemäßen Lagersystems 1, wobei für Elemente, die in Funktion und Aufbau den Elementen der Fig. 1 entsprechen, dieselben Bezugszeichen verwendet werden.

Das Abtriebsrad 9 ist über Schrauben 15 mit einer Welle 16 verbunden, an deren dem Abtriebsrad 9 gegenüberliegenden Ende das in Fig. 1 gezeigte Zwischenrad 10 befestigt ist. Die Welle 16 ist mit Abtriebsrad und Zwischenrad 10 drehbar in dem Tragelement 3 gelagert und kann somit in oder entgegen der vertikalen Richtung V verschoben werden. Um den auf diese Weise eingestellten Abstand zwischen dem Zwischenrad und dem über dem Zwischenrad angeordneten Umlenkrad einzustellen, ist ein verstellbarer Abstandhalter 17 vorgesehen. Der Abstandhalter 17 ist als Gewindestange ausgestaltet, die in die Stützstruktur 2 eingeschraubt ist. Die Stützstruktur 2 weist eine Querstrebe 2c auf, in der eine Gewindebohrung zur Aufnahme des Abstandhalters angeordnet ist. Der Abstandhalter 17 ist für die Einstellung des Abstandes mit einem herkömmlichen Schraubenschlüssel mit einem Sechskantkopf 17a ausgestattet. Nach der Einstellung des Abstandes kann der Abstandhalter über eine auf dem Gewinde des Abstandhalters angeordnete Kontermutter 17b gegenüber der Querstrebe 2c verspannt werden, so dass ein selbsttätiges Verdrehen des Abstandhalters 17 ausgeschlossen ist. Der Abstandhalter 17 umfasst außerdem ein Druckorgan 17c, das als Auflage für das Federelement 12 dient, das zwischen Abstandhalter 17 und Tragelement 3 angeordnet ist.

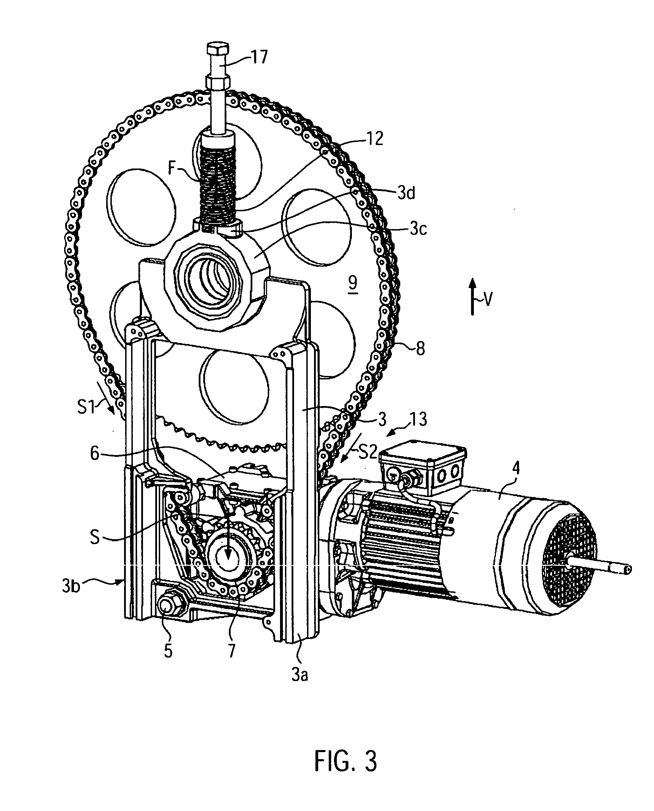

Fig. 3 ist eine schematische Perspektivansicht eines Tragelementes 3 mit am Tragelement 3 befestigten Komponenten des Lagersystems 1. Das Tragelement 3 weist an sich gegenüberliegenden, nach außen weisenden Seiten Gleitflächen 3a und 3b auf, die bei montiertem Tragelement 3 auf den in Fig. 2 gezeigten Führungsflächen 2d, 2e an den Tragstützen 2a, 2b der Stützstruktur 2 aufliegen. Durch eine Verschiebung des Tragelementes 3 entgegen der vertikalen Richtung V wird das zweite Antriebsmittel 11 gespannt. Über den Abstandhalter 17 wirkt eine Spannkraft auf das zweite Antriebsmittel. Die Spannkraft entspricht bevorzugt der Federkraft F und wird über das in Fig. 1 gezeigte Zwischenrad 10 in das zweite Antriebsmittel 11 eingeleitet.

Das vorzugsweise aus Aluminium gegossene Tragelement 3 bildet an einer der Schwenkachse 5 abgewandten Seite einen Lagerbock 3c, in welchem in montiertem Zustand die das Abtriebsrad 9 und das Zwischenrad 10 aufnehmende Welle 16 gelagert ist. Unmittelbar an dem Lagerbock 3c ist eine Aufnahme 3d für das Federelement 12 vorgesehen. Die Federkraft F wirkt durch das Federelement 12 somit unmittelbar auf den Lagerbock 3c, ohne dass weitere Bereiche des Tragelementes 3 belastet werden.

Die durch das Antriebsrad 7 auf das erste Antriebsmittel 8 einwirkende Spannkraft S teilt sich in zwei Teilspannkräfte S1 und S2 auf, die jeweils auf einen Trum des als Zugmittel ausgestalteten Antriebsmittels 8 wirken.

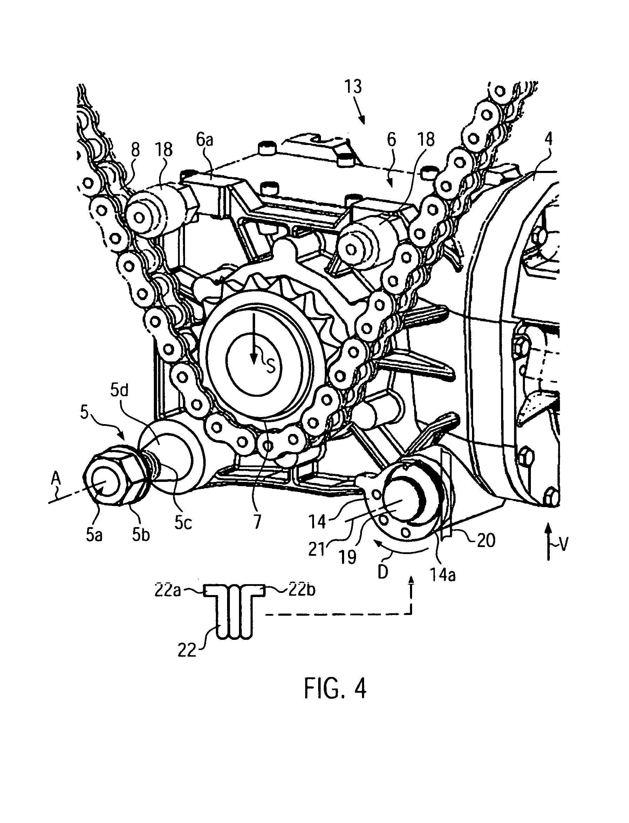

Fig. 4 ist eine schematische Teilansicht der Antriebseinheit des Lagersystems 1. Um während des Betriebes des Lagersystems 1 Schwingungen des ersten Antriebsmittels 8 zu begrenzen, sind an dem Gehäuse 6a des Getriebes 6 Rollen 18 benachbart zu dem ersten Antriebsmittel 8 angeordnet, die Bewegungen des Antriebsmittels 8 quer zu seiner Zugrichtung begrenzen.

Die Schwenkachse 5 umfasst einen in das Gehäuse 6a des Getriebes 6 eingesetzten Bolzen 5a, der in das Tragelement 3 einsetzbar ausgestaltet ist. Der Bolzen 5a ist in dem Gehäuse 6a des Getriebes 6 um eine in Längsrichtung des Bolzens verlaufende Achse A drehbar gelagert. Um den Bolzen 5a am Tragelement 3 zu befestigen, ist eine Mutter 5b vorgesehen, die über ein Gewinde 5c auf den Bolzen 5a aufgeschraubt ist. Eine konische Mantelfläche 5d des Bolzens 5 ist in einer hier nicht gezeigten konischen Bohrung des Tragelementes 3 einsetzbar und bildet mit der Bohrung des Tragelementes 3 einen Kegelpressverband. Indem die Mutter 5b gegen das Tragelement 3 verschraubt wird, kann das Übermaß des Kegelpressverbandes eingestellt werden, bis die Verbindung zwischen Motor 4 und Tragelement 3 ausreichend stabil ist.Somit ist über den Bolzen 5 eine spielfreie Verbindung zwischen Motor 4 und Tragelement 3 herstellbar, die auch bei Belastungen während des Transports oder bei Lastwechseln im Betrieb kein Spiel entstehen lässt.

Ein als Exzenter ausgestaltetes Sperrorgan 14 ist zwischen Schwenkachse 5 und Motor 4 angeordnet. Das Sperrorgan 14 ist auf einem Achsfortsatz 19 drehbar gelagert. Der Achsfortsatz 19 ist von dem Gehäuse 6a des Getriebes 6 gebildet oder in eine Bohrung des Getriebegehäuses 6a eingesetzt.

Eine Umfangsfläche des Sperrorgans bildet eine Andruckfläche 14a, die an einer mit dem Tragelement 3 bewegungsstarr verbundenen Sperrfläche 20 anliegt. Das Sperrorgan 14 ist um eine Drehachse 21 an dem Achsfortsatz 19 drehbar gelagert, wobei der Abstand der Andruckfläche 14a von der Drehachse 21 über den Umfang des Sperrorgans 14 veränderlich ist. Bei einer Schwenkbewegung des von dem Motor 4 und dem Getriebe 6 gebildeten Hebelelementes 13 in vertikaler Richtung V um die Schwenkachse 5 wälzt sich die Andruckfläche 14a auf der Sperrfläche 20 ab, bis aufgrund einer Bewegung der Andruckfläche 14a in Richtung der Sperrfläche 20 eine Sperrung der Bewegung des Hebelelementes 13 einsetzt. Die Sperrwirkung des Sperrorgans 14 wird durch eine Sperrfeder unterstützt, die zwischen Gehäuse 6a und Sperrorgan 14 angeordnet ist und das Sperrorgan 14 in eine im Uhrzeigersinn um die Drehachse 21 weisende Drehrichtung D drückt.

Bei einer Schwenkbewegung des Hebelelementes 13 im Uhrzeigersinn um die Schwenkachse 5 wird das Sperrorgan 14 hingegen entgegen der Federkraft der Sperrfeder auf der Sperrfläche 20 abgerollt, bis die Andruckfläche 14a von der Sperrfläche 20 abhebt und somit die Sperrwirkung des Sperrorgans 14 aufgehoben wird. Eine Schwenkbewegung des Hebelelementes 13 im Uhrzeigersinn um das Schwenkachse 5 ist folglich möglich, sofern das erste Antriebsmittel 8 Spiel aufweist. Erst wenn das durch die Zugkräfte in dem ersten Antriebsmittel 8 erzeugte Drehmoment um die Schwenkachse 5 dem durch die Gewichtskräfte der an dem Hebelelement 13 angeordneten Komponenten erzeugten Moment entspricht, bleibt das Hebelelement 13 in seiner Position. Eine Drehung des Hebelelementes 13 entgegen dem Uhrzeigersinn um die Schwenkachse 5 ist hingegen in jeder Position des Hebelelementes 13 durch das sich aufgrund der Sperrfeder selbsttätig nachstellende Sperrorgan 14 verhindert.

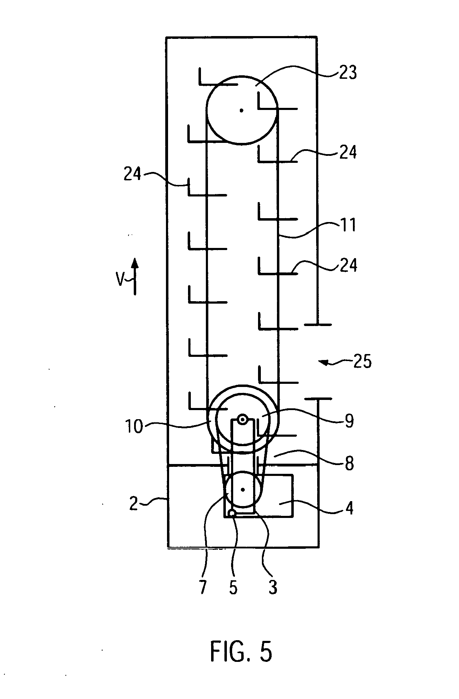

Fig. 5 zeigt ein weiteres Ausführungsbeispiel eines erfindungsgemäßen Lagersystems, das als Paternoster-Lagerlift ausgestaltet ist, wobei für Elemente, die in Funktion und Aufbau den Elementen des Ausführungsbeispiels der Fig. 1 bis 4 entsprechen, dieselben Bezugszeichen verwendet werden. Der Kürze halber wird auf die Unterschiede zum Ausführungsbeispiel der Fig. 1 bis 4 eingegangen.

Eine hier nicht dargestellte Antriebswelle, die in dem Tragelement 3 drehbar gelagert ist, verbindet das Abtriebsrad 9 konzentrisch und starr mit einem Zwischenrad 10. Alternativ kann das Zwischenrad 10 von dem Abtriebsrad 9 gebildet sein. Das zweite Antriebsmittel 11 koppelt das Zwischenrad 10 und somit auch das Abtriebsrad 9 antriebskraftübertragend mit einem ortsfest an der Stützstruktur 2 gelagerten Umlenkrad 23. An dem zweiten Antriebsmittel 11 ist eine Vielzahl von Lagergutträgern 24 befestigt, die durch das zweite Antriebsmittel 11 in vertikaler Richtung V oder entgegen der vertikalen Richtung V transportiert werden. An einer Bedienstation 25 kann auf den Lagergutträgern 24 befindliches Lagergut entnommen werden.

Der Motor 4, das Antriebsrad 7, das Abtriebsrad 9 und das unmittelbar mit dem Abtriebsrad 9 verbundene Zwischenrad 10 sind an dem Tragelement 3 gelagert, das wiederum in oder entgegen der vertikalen Richtung V verschieblich in der Stützstruktur 2 gelagert ist. Auf das zweite Antriebsmittel 11 wirkende Zugkräfte haben somit keine Auswirkung auf die Spannung indem das Antriebsrad 7 und das Abtriebsrad 9 antriebskraftübertragend koppelnden ersten Antriebsmittel 8.

Neben der beschriebenen Ausführungsform eines Lagersystems als Paternoster-Lagerlift kann die Erfindung auch in anderen Typen von Lagersystemen ihre Anwendung finden. So kann das Lagersystem beispielsweise als Horizontal-Umlauflagersystem ausgestaltet sein, bei dem die Lagergutträger in einer horizontalen Richtung nebeneinander angeordnet sind.

## Patentansprüche

1. Lagersystem (1) mit Lagergutträgern (24) zur Einlagerung von Lagergut im Lagersystem (1), mit wenigstens einem Antriebsrad (7), wenigstens einem mit dem Antriebsrad (7) gekoppelten Motor (4), wenigstens einem über ein erstes umlaufendes Antriebsmittel (8) antriebskraftübertragend mit dem Antriebsrad (7) gekoppelten Abtriebsrad (9), und mit wenigstens einem ortsfesten Umlenkrad (23), das durch wenigstens ein zweites umlaufendes Antriebsmittel (11) mit dem Abtriebsrad (9) antriebskraftübertragend gekoppelt ist, wobei das Abtriebsrad (9) gegenüber dem Umlenkrad (23) abstandsverschieblich gelagert ist, **dadurch gekennzeichnet, dass** das Antriebsrad (7) sowohl unabhängig gegenüber dem Abtriebsrad (9) als auch unabhängig gegenüber dem Umlenkrad (23) abstandsverschieblich gelagert ist.

2. Lagersystem (1) nach Anspruch 1, **dadurch gekennzeichnet, dass** das Abtriebsrad (9) und das Antriebsrad (7) an einem gegenüber einer Stützstruktur (2) des Lagersystems (1) beweglichen Tragelement (3) angeordnet sind.

3. Lagersystem (1) nach Anspruch 1 oder 2, **dadurch gekennzeichnet, dass** das Tragelement (3) ein von der Stützstruktur (2) längsverschieblich geführter Schlitten ist.

4. Lagersystem (1) nach einem der Ansprüche 1 bis 3, **dadurch gekennzeichnet, dass** das Antriebsrad (7) an einem schwenkbaren Hebelelement (13) beabstandet von einer Schwenkachse (5) des Hebelelementes (13) beweglich gegenüber dem Tragelement (3) angeordnet ist.

5. Lagersystem (1) nach Anspruch 4, **dadurch gekennzeichnet, dass** der Motor (4) am Hebelelement (13) beabstandet von der Schwenkachse (5) befestigt ist.

6. Lagersystem (1) nach Anspruch 4 oder 5, **dadurch gekennzeichnet, dass** das Antriebsrad (7) zwischen der Schwenkachse (5) und dem Motor (4) angeordnet ist.

7. Lagersystem (1) nach einem der Ansprüche 1 bis 6, **dadurch gekennzeichnet, dass** eine auf das erste Antriebsmittel (8) wirkende Spannkraft (S) durch eine Gewichtslast des Motors (4) und/oder Antriebsrades (7) und/oder Hebelelementes (13) erzeugt ist.

8. Lagersystem (1) nach einem der Ansprüche 1 bis 7, **dadurch gekennzeichnet, dass** ein Sperrorgan (14) vorgesehen ist, das unter Wirkung der Gewichtslast selbsttätig von einer Verschiebestellung, in der das Antriebsrad (7) in Richtung weg vom Abtriebsrad (9) verschieblich ist, in eine Haltestellung, in der eine Bewegung des Antriebsrades (7) zum Abtriebsrad (9) blockiert ist, beweglich ausgestaltet ist.

9. Lagersystem (1) nach Anspruch 8, **dadurch gekennzeichnet, dass** eine Sperrfeder (22) vorgesehen ist, durch welche das Sperrorgan (14) in die Haltestellung gedrückt ist.

10. Lagersystem (1) nach Anspruch 8 oder 9, **dadurch gekennzeichnet, dass** das Sperrorgan (14) als ein gegenüber dem Tragelement (3) drehbares Exenterelement (14) mit einer Andruckfläche (14a) ausgestaltet ist, die mit einer mit dem Tragelement (3) bewegungsstarr verbundenen Sperrfläche (20) in Eingriff bringbar angeordnet und unter Wirkung der Gewichtslast von der Sperrfläche (20) weg beweglich ist.

11. Lagersystem (1) nach einem der Ansprüche 2 bis 11, **dadurch gekennzeichnet, dass** zwischen der Stützstruktur (2) und dem Tragelement (3) ein verstellbarer Abstandhalter (17) vorgesehen ist, durch den der Abstand zwischen Abtriebsrad (9) und Umlenkrad (23) einstellbar ist.

12. Lagersystem (1) nach Anspruch 11, **dadurch gekennzeichnet, dass** zwischen dem Abstandhalter (17) und dem Tragelement (3) ein elastisch verformbares Federelement (12) angeordnet ist.

## Claims

1. Storage system (1) comprising storage good carriers (24) for storing storage goods in the storage system (1), at least one drive wheel (7), at least one motor (4) coupled to the drive wheel (7), at least one output wheel (9) which is coupled to the drive wheel (7) via a first revolving drive means (8) and transmits drive power, and at least one stationary deflection wheel (23) which is coupled to the output wheel (9) via at least one second revolving drive means (11) and transmits drive power, the output wheel (9) being mounted relative to the deflection wheel (23) so that a distance in between the two can be modified, **characterised in that** the drive wheel (7) is mounted so that both the distance from the output wheel (9) can be independently modified and the distance from the deflection wheel (23) can be independently modified.

2. Storage system (1) according to claim 1, **characterised in that** the output wheel (9) and the drive wheel (7) are disposed on a carrier element (3) that can be moved in relation to the support structure (2) of the storage system (1).

3. Storage system (1) according to claim 1 or 2, **characterised in that** the carrier element (3) is a slide that can be guided in a longitudinally displaceable manner by the support structure (2).

4. Storage system (1) according to any one of claims 1 to 3, **characterised in that** the drive wheel (7) is disposed on a pivotable lever element (13) at a distance from a swivel axis (5) of the lever element (13) such that it can move in relation to the carrier element (3).

5. Storage system (1) according to claim 4, **characterised in that** the motor (4) is secured on the lever element (13) at a distance from the swivel axis (5).

6. Storage system (1) according to claim 4 or 5, **characterised in that** the drive wheel (7) is disposed between the swivel axis (5) and the motor (4).

7. Storage system (1) according to any one of claims 1 to 6, **characterised in that** a tensioning force (S) acting on the first drive means (8) is generated by a weight charge of the motor (4) and/or of the drive wheel (7) and/or of the lever element (13).

8. Storage system (1) according to any one of claims 1 to 7, **characterised in that** a locking device (14) is provided, which is configured to move automatically under the effect of the weight charge from a shifting position, in which the drive wheel (7) can be displaced in the direction away from the output wheel (9), into a holding position, in which a movement of the drive wheel (7) towards the output wheel (9) is blocked.

9. Storage system (1) according to claim 8, **characterised in that** a locking spring (22) is provided, by means of which the locking device (14) is pushed into the holding position.

10. Storage system (1) according to claim 8 or 9, **characterised in that** the locking device (14) is configured as an eccentric element (14) with a contact surface (14a) which can be rotated in relation to the carrier element (3), which is disposed to mesh with a locking surface (20) connected in a rigid manner to the carrier element (3) and which under the effect of the weight charge can be moved away from the locking surface (20).

11. Storage system (1) according to any one of claims 2 to 11, **characterised in that** between the support structure (2) and the carrier element (3) an adjustable spacer (17) is provided, by means of which the distance between the output wheel (9) and the deflection wheel (23) can be adjusted.

12. Storage system (1) according to claim 11, **characterised in that** between the spacer (17) and the carrier element (3) an elastically deformable spring element (12) is disposed.

## Revendications

1. Système de magasin de stockage (1) comprenant des supports de marchandises à stocker (24) pour le stockage de marchandises à stocker dans le système de magasin de stockage (1), comprenant également au moins une roue d'entraînement menante (7), au moins un moteur (4) couplé à la roue d'entraînement menante (7), au moins une roue d'entraînement menée (9) couplée, sur le plan de la transmission de la force d'entraînement, à la roue d'entraînement menante (7), par l'intermédiaire d'un premier moyen de transmission d'entraînement (8) en révolution sans fin, et comprenant finalement au moins une roue de renvoi (23) en position fixe, qui est couplée sur le plan de la transmission de la force d'entraînement, à la roue d'entraînement menée (9), par l'intermédiaire d'au moins un deuxième moyen de transmission d'entraînement (11) en révolution sans fin, la roue d'entraînement menée (9) étant montée de manière à pouvoir coulisser par rapport à la roue de renvoi (23) dans la direction de leur distance d'espacement, **caractérisé en ce que** la roue d'entraînement menante (7) est montée de manière à pouvoir coulisser, aussi bien de manière indépendante par rapport à la roue d'entraînement menée (9) que de manière indépendante par rapport à la roue de renvoi (23), dans la direction de leur distance d'espacement.

2. Système de magasin de stockage (1) selon la revendication 1, **caractérisé en ce que** la roue d'entraînement menée (9) et la roue d'entraînement menante (7) sont agencées sur un élément de support (3) mobile par rapport à une structure porteuse (2) du système de magasin de stockage (1).

3. Système de magasin de stockage (1) selon la revendication 1 ou la revendication 2, **caractérisé en ce que** l'élément de support (3) est un chariot guidé en coulissement longitudinal par la structure porteuse (2).

4. Système de magasin de stockage (1) selon l'une des revendications 1 à 3, **caractérisé en ce que** la roue d'entraînement menante (7) est agencée sur un élément de levier (13) pivotant, de manière mobile par rapport à l'élément de support (3), à distance d'un axe de pivotement (5) de l'élément de levier (13).

5. Système de magasin de stockage (1) selon la revendication 4, **caractérisé en ce que** le moteur (4) est fixé sur l'élément de levier (13), à distance de l'axe de pivotement (5).

6. Système de magasin de stockage (1) selon la revendication 4 ou la revendication 5, **caractérisé en ce que** la roue d'entraînement menante (7) est agencée entre l'axe de pivotement (5) et le moteur (4).

7. Système de magasin de stockage (1) selon l'une des revendications 1 à 6, **caractérisé en ce qu'**une force de tension (S) agissant sur le premier moyen de transmission d'entraînement (8), est produite par une charge de poids du moteur (4) et/ou de la roue d'entraînement menante (7) et/ou de l'élément de levier (13).

8. Système de magasin de stockage (1) selon l'une des revendications 1 à 7, **caractérisé en ce qu'**il est prévu un organe de verrouillage (14), qui, sous l'action de la charge de poids, est réalisé de manière à être mobile automatiquement d'une position de coulissement, dans laquelle la roue d'entraînement menante (7) peut coulisser dans la direction s'éloignant de la roue d'entraînement menée (9), à une position de maintien, dans laquelle un mouvement de la roue d'entraînement menante (7) vers la roue d'entraînement menée (9) est bloqué.

9. Système de magasin de stockage (1) selon la revendication 8, **caractérisé en ce qu'**il est prévu un ressort de verrouillage (22) par lequel l'organe de verrouillage (14) est repoussé dans la position de maintien.

10. Système de magasin de stockage (1) selon la revendication 8 ou la revendication 9, **caractérisé en ce que** l'organe de verrouillage (14) est réalisé en tant qu'élément excentrique (14) rotatif par rapport à l'élément de support (3) et présentant une surface d'appui (14a), qui est agencée de manière à pouvoir être amenée en prise avec une surface de verrouillage (20) liée à l'élément de support (3) de manière rigide sur le plan de la mobilité, et qui peut être éloignée de la surface de verrouillage (20) sous l'action de la charge de poids.

11. Système de magasin de stockage (1) selon l'une des revendications 2 à 11, **caractérisé en ce qu'**entre la structure porteuse (2) et l'élément de support (3) est prévue une entretoise d'espacement (17) réglable, grâce à laquelle il est possible de régler la distance d'espacement entre la roue d'entraînement menée (9) et la roue de renvoi (23).

12. Système de magasin de stockage (1) selon la revendication 11, **caractérisé en ce qu'**entre l'entretoise d'espacement (17) et l'élément de support (3), est agencé un élément de ressort (12) élastiquement déformable.
